# EUROPÄISCHE PATENTSCHRIFT

(11) **EP 2 793 732 B1**
(45) Veröffentlichungstag und Bekanntmachung des Hinweises auf die Patenterteilung: **28.06.2017**
(21) Anmeldenummer: 12801525.2
(22) Anmeldetag: 04.12.2012
(51) Int. Cl.: A61C 8/00

(54) **ZAHNPROTHETISCHES ABUTMENT UND KLEBEBASIS HIERFÜR**
DENTAL IMPLANT ABUTMENT AND ADHESIVE-BONDING BASE THEREFOR
SYSTÈME D'ANCRAGE D'UNE PROTHÈSE DENTAIRE ET BASE DE COLLAGE ASSOCIÉE

(30) Priorität: 21.12.2011 DE 202011052393 U
(43) Veröffentlichungstag der Anmeldung: 29.10.2014
(73) Patentinhaber: bredent medical GmbH & Co. KG, 89250 Senden (DE)
(72) Erfinder: MIELECKE, Peter, 89079 Ulm (DE)
(74) Vertreter: Baur & Weber Patentanwälte PartG mbB
(86) Internationale Anmeldenummer: PCT/EP2012/074350
(87) Internationale Veröffentlichungsnummer: WO 2013/092200

(56) Entgegenhaltungen:
- WO-A1-2010/088754
- US-A- 5 281 140

## Beschreibung

Die Erfindung betrifft ein zahnprothetisches Abutment und eine Klebebasis hierfür.

In der Zahnprothetik ist für einen Aufbau über einem in einem Kiefer verankerten Implantat unter anderem eine Technik mit einem mehrteiligen Abutment gebräuchlich, wobei eine typischerweise aus Titan gefertigte Klebebasis zur Verschraubung mit einem Implantat ausgebildet ist und an einem von dem Implantat weg weisenden, eine Längsachse umgebenden Pfosten eine im wesentlichen radial nach außen weisende Klebefläche ausgebildet ist. Ein Aufbaukörper, welcher insbesondere aus Zirkonoxid bestehen kann, besitzt eine Aussparung, welche ein geringes Übermaß gegenüber dem Pfosten aufweist und deren Innenwand eine Gegenklebefläche zu der Klebefläche des Pfostens bildet. Klebefläche und Gegenklebefläche sind typischerweise im wesentlichen rotationssymmetrisch um die Längsachse ausgeführt. Der Aufbaukörper, welcher teilweise auch allein als Abutment bezeichnet wird, wird mit der Klebebasis über eine Klebeverbindung verbunden, indem auf die Klebefläche und/oder die Gegenklebefläche ein aushärtbarer viskoser Kleber aufgebracht und der Aufbaukörper auf den Pfosten aufgesteckt wird. Der Aufsteckvorgang ist axial begrenzt durch den Anschlag einer Endfläche des Aufbaukörpers an einer Anschlagfläche der Klebebasis, welche am Fuß des Pfostens diesen umgebend im wesentlichen quer zur Längsachse verläuft. Zwischen Pfosten und Aufbaukörper kann noch eine Verdrehsicherung durch formschlüssigen Eingriff eines Verdrehsicherungselements der Klebebasis in ein Gegensicherungselement des Aufbaukörpers vorgesehen sein. Für die Verdrehsicherung sind Ausführungen mit gestuften Strukturen an der Stirnseite der Klebebasis oder insbesondere radiale Vorsprünge am Pfosten, welche mit radialen Ausbuchtungen an der Innenwand der Aussparung im Aufbaukörper zusammenwirken, bekannt.

Der benutzte, aushärtbare Kleber kann Füllstoffe enthalten. Die Spaltbreite des Klebespalts zwischen Klebefläche des Pfostens und Gegenklebefläche des Aufbaukörpers liegt für optimale Verklebung typischerweise im Bereich von 0,03 mm bis 0,05 mm. Durch die Radien von Klebefläche und Gegenklebefläche ist eine mittlere Spaltbreite vorgegeben. Kleber liegt auch zwischen der Anschlagfläche und der Endfläche vor, wo die Kleberschichtdicke aber möglichst gering sein soll. Die Fertigungstoleranzen für die Klebefläche, Gegenklebefläche und Verdrehsicherungen liegen typischerweise bei +/- 0,01 mm.

Es zeigt sich, dass bei der typischerweise ohne Ausrichtvorrichtung manuell erfolgenden Herstellung der Klebeverbindung zwischen Klebebasis und Aufbaukörper Fehler auftreten können, welche als Abweichungen des Randes der Endfläche des Aufbaukörpers von dem Rand der Anschlagfläche in Erscheinung treten und/oder die Festigkeit der Klebeverbindung beeinträchtigen können.

Der vorliegenden Erfindung liegt die Aufgabe zugrunde, ein mehrteiliges Abutment mit einer Klebebasis sowie eine Klebebasis für ein solches Abutment anzugeben, welche bei einfacher Handhabung eine reproduzierbar bessere Qualität der Klebeverbindung ergeben.

Aus der WO 2010/088754 A1 ist eine Steckeranordnung zur Montage eines Abutments an einem Zahnimplantat gezeigt. Ein erstes Steckverbindungsmittel erstreckt sich in eine erste Richtung zum Eingriff mit dem Zahnimplantat. Ein zweites Steckverbindungsmittel, das sich in einer zweiten Richtung entgegengesetzt zu der ersten Richtung erstreckt ist zum Eingriff mit einem entsprechenden Verbindungsabschnitt in einem unteren Abschnitt des Abutments versehen und umfasst zumindest ein Drehsicherungselement.

In der US 5,281,140 A ist ein mehrteiliger Aufbau für die Verwendung mit Dentalimplantaten wie zylinderförmige Implantate gezeigt.

Erfindungsgemäße Lösungen sind in den unabhängigen Ansprüchen beschrieben. Die abhängigen Ansprüche enthalten vorteilhafte Ausgestaltungen und Weiterbildungen der Erfindung.

Die Anordnung mehrerer um die Längsachse des Pfostens zueinander winkelversetzter Zentrierelemente ermöglicht bei einer durch die Radien der Klebefläche und der Gegenklebefläche vorgegebenen mittleren Spaltbreite eine Begrenzung der Variation der Spaltbreite über den Umfang um den Pfosten auf einen engen Bereich um die mittlere Spaltbreite. Die Erfindung macht sich dabei die Erkenntnis zunutze, dass die Probleme einer unzulänglichen Stabilität von Klebeverbindungen bei bekannten Abutments wesentlich darauf zurück zu führen ist, dass eine Abweichung der Klebespaltbreite von einer optimalen Soll-Breite sowohl bei größeren als auch bei kleineren Spaltbreiten zu einer Schwächung der Klebeverbindung führt. Bei einem Abutment mit Klebebasis ohne Zentrierelemente ist eine Querverschiebbarkeit zwischen Aufbaukörper und Klebebasis im wesentlichen im Ausmaß der vorgegebenen mittleren Spaltbreite gegeben, so dass im Extremfall die Breite des Klebespalts zwischen annähernd Null und der doppelten Spaltbreite auftritt. Auch ein Verdrehsicherungselement bringt dabei keine nennenswerte Verbesserung.

Durch die Zentrierelemente kann die maximale Fehlpositionierung quer zur Längsachse gegenüber einer ideal zentrierten Relativposition von Aufbaukörper und Klebebasis auf einen im Vergleich zur mittleren Spaltbreite des Klebespalts wesentlich kleineren Wert, insbesondere auf einen durch Maßtoleranzen von Aufbaukörper und Klebebasis unvermeidbaren Wert reduziert werden.

Die Zentrierelemente haben ferner den vorteilhaften Effekt, dass eine Inkongruenz der Ränder einer Anschlagfläche der Klebebasis und einer Endfläche des Aufbaukörpers samt einer dabei auftretenden Stufe minimiert wird. Auch eine Verkippung der Längsachsen von Aufbaukörper und Klebebasis kann vorteilhaft auf kleine Werte begrenzt werden.

Die Klebefläche und die Gegenklebefläche seien als im wesentlichen rotationssymmetrisch um die von dem Pfosten umgebene Längsachse angenommen. Die Klebefläche und die Gegenklebefläche können eine leicht konische Form aufweisen, sind aber vorzugsweise im wesentlichen kreiszylindrisch, was insbesondere für eine Erzeugung der Gegenklebefläche in einem Dentallabor mit den dort typischerweise verfügbaren Geräten von Vorteil ist.

Die Zentrierelemente können von der Gegenklebefläche radial nach innen in den Klebespalt ragen, sind aber vorzugsweise als über die Klebefläche radial hinaus ragend an dem Pfosten ausgebildet. Soweit die Zentrierelemente in dem axialen Bereich der Klebefläche von dieser radial abstehend angeordnet sind, seien Flächen der Zentrierelemente nicht als Teile der Klebefläche angesehen, auch wenn die Zentrierelemente mit Kleber behaftet sind.

Vorteilhafterweise sind Zentrierelemente an axial um wenigstens 50 % der axialen Länge des Pfostens beabstandeten Positionen vorgesehen, so dass auch eine Verkippung des Aufbaukörpers gegen die Klebebasis zuverlässig vermieden werden kann. Die Zentrierelemente können dabei als axial beabstandete diskrete Elemente vorgesehen sein oder vorzugsweise entlang der Klebefläche zur Längsachse parallel durchgehend ausgebildet sein.

Die Zentrierelemente verringern, soweit sie im Bereich der Klebefläche angeordnet sind, vorteilhafterweise die für die Klebeverbindung verfügbare Klebefläche um höchstens 30 %, insbesondere um höchstens 20 % gegenüber einer vollständig um die Längsachse umlaufenden Rotationsfläche.

In bevorzugter Ausführungsform kann wenigstens ein Zentrierelement zugleich als ein Verdrehsicherungselement ausgebildet sein, welches formschlüssig mit einem Sicherungsgegenelement zusammenwirkt, um eine Verdrehung des Aufbaukörpers um den Pfosten zu verhindern oder auf einen kleinen Wert zu begrenzen. Verdrehungssichernde Strukturen sind an sich bekannt. In vorteilhafter Ausführungsform kann ein solches Verdrehsicherungselement sich axial im wesentlichen über die gesamte Länge der Klebefläche erstrecken.

In vorteilhafter Ausführung kann ein Verdrehsicherungselement in einer senkrecht zur Längsachse liegenden Schnittebene eine radial nach außen konvex gewölbte, insbesondere im wesentlichen einen Kreisbogen bildende Kontur aufweisen, was von Vorteil für die Erzeugung des Sicherungsgegenelements als Vertiefung gegen die Gegenklebefläche mittels eines rotierenden Werkzeugs, insbesondere in Dentallabors ist.

In bevorzugter Ausführung sind wenigstens zwei, insbesondere genau zwei Zentrierelemente zugleich als Verdrehsicherungselemente ausgebildet. Insbesondere können genau zwei zugleich als Verdrehsicherungselemente ausgebildete Zentrierelemente die einzigen beiden Zentrierelemente bilden, welche um 180° gegeneinander um die Längsachse winkelversetzt angeordnet sind.

Die Verringerung der am Fuß des Pfostens quer zur Längsachse verlaufenden Anschlagfläche der Klebebasis auf nur einem Teil des Ringbereichs zwischen Pfosten und Außenrand der Anschlagfläche und die Ausbildung einer axial vertieften Nut zwischen Anschlagfläche und Pfosten führt zu einer vorteilhaft geringen Schichtdicke des Klebers zwischen der Anschlagfläche über die Kleberschicht axial abgestützten Endfläche des Aufbaukörpers. Dies kann damit erklärt werden, dass beim axialen Andrücken des Aufbaukörpers an die Klebebasis durch die kleinere Anschlagfläche der Druck auf den Kleber stärker ist als bei einer größeren Anschlagfläche und der Kleber dadurch leichter seitlich verdrängt werden kann. Die axial vertiefte Nut begünstigt dabei zugleich ein Verdrängen von Kleber radial nach innen, wo der verdrängte Kleber in der axial vertieften Nut aufgenommen werden kann. Die radiale Breite der Anschlagfläche beträgt vorteilhafterweise nicht mehr als 60 %, insbesondere nicht mehr als 50 % der Radiusdifferenz zwischen Pfosten oder Klebefläche und Außenwand der Anschlagfläche als radiale Breite des genannten Ringbereichs.

Vorteilhafterweise kann die axial vertiefte Nut radial nach innen bis zum Pfosten reichen und in bevorzugter Ausführung dort in eine radial vertiefte Nut am Fuß des Pfostens übergehen. Die radial vertiefte Nut am Fuß des Pfostens kann zum einen gleichfalls ein Aufnahmevolumen für beim Zusammenfügen von Aufbaukörper und Klebebasis verdrängtem Kleber und zum anderen auch eine verbesserte axiale Verankerung des Aufbaukörpers auf der Klebebasis durch den Formschluss des ausgehärteten Klebers in der radial vertieften Nut bilden.

Die Erfindung ist nachfolgend anhand bevorzugter Ausführungsbeispiele unter Bezugnahme auf die Abbildungen noch eingehend veranschaulicht. Dabei zeigt:
- Fig. 1: einen Aufbaukörper,
- Fig. 2: eine Klebebasis,
- Fig. 3: einen Ausschnitt aus Fig. 2 A,
- Fig. 4: ein zusammengefügter Abutment,
- Fig. 5: einen Ausschnitt aus Fig. 4,
- Fig. 6: Klebebasis und Aufbaukörper in zentrierter Position,
- Fig. 7: Klebebasis und Aufbaukörper in dezentrierter Position,
- Fig. 8: eine Variante zu Fig. 6,
- Fig. 9: eine weitere Variante zu Fig. 6.

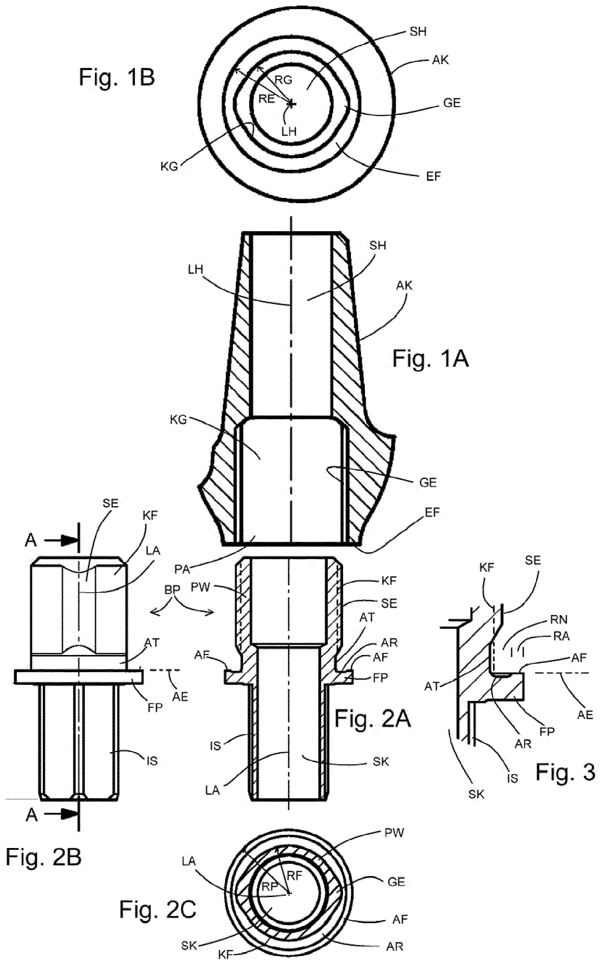

Fig. 1 zeigt einen Aufbaukörper, welcher typischerweise aus Zirkonoxid besteht, in einer Schnittdarstellung nach Fig. 1 (A) und einer zugehörigen axialen Ansicht nach Fig. 1 (B). Die Außenkontur des Aufbaukörpers AK ist in bekannter Weise durch Individualisierung an den jeweiligen Einsatzfall angepaßt. Der Aufbaukörper AK umgibt eine Längsachse LH, welche innerhalb einer Pfostenaufnahme PA und eines Schraubenkanals SH liegt. An einem axialen Ende, welches in Fig. 1 (A) nach unten weist, ist eine die Pfostenaufnahme PA geschlossen umgebende Endfläche EF ausgebildet. Die Endfläche EF liegt typischerweise in einer senkrecht zur Längsachse LH verlaufenden Ebene. Das der Endfläche EF entgegen gesetzte Ende des Aufbaukörpers AK weist im skizzierten Beispiel gleichfalls eine ebene Ringfläche auf, welche aber nicht zwingend ist und je nach Individualisierung des Aufbaukörpers AK auch durch ein anders geformtes Ende ersetzt sein kann.

Fig. 2 zeigt eine Klebebasis, welche zur Verbindung mit dem Aufbaukörper AK über eine Klebeverbindung zu einem Abutment vorgesehen ist. Die Klebebasis ist in Fig. 2 (B) in einer Seitenansicht, in Fig. 2 (A) in einer Schnittdarstellung entlang A - A von Fig. 2 (B) und in Fig. 2 (C) in einer axialen Schnittansicht dargestellt. Die Klebebasis besteht typischerweise aus Metall, insbesondere Titan.

Die Klebebasis weist eine Längsachse LA auf, welche innerhalb einer axial durch die Klebebasis führenden, gestuften Bohrung liegt. Die axiale Bohrung durch die Klebebasis bildet in einem in der Darstellung nach Fig. 2 (A) unteren Bereich einen Schraubenkanal SK, durch welchen eine der Befestigung der Klebebasis auf einem Implantat dienende Schraube mit ihrem Gewindeschaft durchführbar ist. Der Schraubenkopf stützt sich an einer Schulter, an welcher sich die Bohrung erweitert, ab. Der erweiterte axiale Bereich der Bohrung liegt im Längsbereich eines Pfostens der Klebebasis, welcher im wesentlichen durch eine zumindest annähernd kreisringzylindrische Wand PW gebildet ist. Der Schraubenkanal SK ist durch eine Struktur IS umgeben, welche in eine korrespondierende Aufnahme eines Implantats einsetzbar ist und welche die Klebebasis gegen Verdrehen um die Längsachse LA relativ zu dem Implantat verhindert. Die Struktur IS kann beispielsweise sechszählig drehsymmetrisch, insbesondere in Form eines Sechskants oder einer Torx-Struktur ausgebildet sein. Bezüglich der Längsachse LA axial zwischen der Struktur IS und dem Pfosten liegt eine Stützplatte FP, welche radial über die Außenwand des Pfostens hinaus ragt und auf ihrer der Struktur IS axial abgewandten Fläche eine Anschlagfläche AF bildet, an welcher sich im zusammen gefügten Zustand von Aufbaukörper AK und Klebebasis die Endfläche EF des Aufbaukörpers axial abstützt.

In dem in Fig. 3 weiter vergrößert dargestellten Ausschnitt eines die Stützplatte FP enthaltenden Axialbereichs der Klebebasis ist veranschaulicht, dass die in einer Anlageebene AE liegende Anschlagfläche AF von dem Pfosten durch eine axial gegen die Anlageebene AE vertiefte Nut AR radial getrennt ist und nur eine schmale Ringfläche am äußeren Rand der Stützplatte FP bildet.

Der Pfosten BP, welcher im wesentlichen aus der kreisringzylindrischen Wand PW besteht, bildet an seiner der Längsachse LA abgewandten Außenseite eine Klebefläche für die Klebeverbindung zum Aufbaukörper AK. Die Klebefläche KF sei als im wesentlichen rotationssymmetrisch, insbesondere kreiszylindrisch um die Längsachse LA angesehen. Die Klebefläche KF kann durch weitere Elemente der Klebebasis, wie insbesondere Verdrehsicherungselemente, Zentrierelemente oder Vertiefungen gegen die Klebefläche KF unterbrochen sein. Im skizzierten Beispiel sind dies insbesondere Verdrehsicherungselemente SE, welche mit Sicherungsgegenelementen GE in der eine Pfostenaufnahme für den Pfosten BP bildenden Aussparung PA des Aufbaukörpers AK zusammen wirken, um im axial zusammen gefügten Zustand von Aufbaukörper AK und Klebebasis eine Verdrehung dieser beiden Bauteile relativ zueinander um die Längsachsen LA, LH zu verhindern oder zumindest auf einen in der Praxis nicht störenden Drehwinkel zu begrenzen. In Fig. 2 (B) ist ein solches Verdrehsicherungselement SE dem Betrachter zugewandt, in der Schnittdarstellung der Klebebasis nach Fig. 2 (A) entsprechend der Schnittebene A - A nach Fig. 2(B) verläuft die Schnittebene durch zwei bezüglich der Längsachse diametral gegenüber liegend angeordnete Verdrehsicherungselemente SE. Der rotationssymmetrische Verlauf einer die Klebefläche KF enthaltenden rotationssymmetrischen Kreiszylindermantelfläche ist als fiktive Fortsetzung der Klebefläche durch die Verdrehsicherungselemente SE ist in Fig. 2 (A) mit unterbrochener und mit KF für die Klebefläche bezeichneter Linie dargestellt. Die Verdrehsicherungselemente SE ragen über die Kreiszylinderfläche der Klebefläche KF radial hinaus.

In der Aussparung als Pfostenaufnahme PA in dem Aufbaukörper AK ist eine im wesentlichen rotationssymmetrisch um die Längsachse LH verlaufende Innenwandfläche als Gegenklebefläche KG für die Klebeverbindung vorgesehen. Die Sicherungsgegenelemente, welche als Verdrehsicherung formschlüssig mit den Verdrehsicherungselementen SE der Klebebasis zusammen wirken, sind als radiale Einbuchtungen gegen den rotationssymmetrischen Verlauf der Gegenklebefläche KG ausgebildet. Im skizzierten Beispielfall sind genau zwei Verdrehsicherungselemente SE an der Klebebasis und genau zwei Sicherungsgegenelemente GE in der Aufnahme des Aufbaukörpers vorgesehen, wobei die Verdrehsicherungselemente SE und die Gegensicherungselemente GE jeweils um 180° um die Längsachsen gegeneinander verdreht angeordnet sind, wie aus den axialen Ansichten des Aufbaukörpers nach Fig. 1 (B) bzw. der Klebebasis nach Fig. 2 (C) ersichtlich ist. Die axiale Ansicht des Aufbaukörpers AK nach Fig. 1 (B) ist von der Endfläche EF her zu verstehen. Die axiale Ansicht der Klebebasis nach Fig. 2 (C) bildet eine teilgeschnittene Ansicht mit einer senkrecht zur Längsachse LA liegenden Schnittebene durch den Pfosten, so dass die Pfostenwand PW in Fig. 2 (C) schraffiert dargestellt ist. Der Radius des rotationssymmetrischen Verlaufs der die Gegenklebefläche KG bildenden Innenwand der Aussparung PA im Aufbaukörper AK ist mit RG bezeichnet, der Außenradius der Endfläche EF mit RE. In Fig. 2 (C) ist mit RF der Radius der Kreiszylindermantelfläche der Klebefläche KF und mit RP der Außenradius der Anschlagfläche AF der Stützplatte FP bezeichnet.

Die Klebefläche KF endet in Richtung des Fußes des Pfostens BP vor der Anlageebene AE der Stützplatte FP. In diesem Fußbereich des Pfostens ist eine radial vertiefte Nut AT ausgebildet, welche vorzugsweise vollständig um den Pfosten umläuft, so dass auch die Verdrehsicherungselemente SE axial von der Anlageebene AE beabstandet sind. Die radial vertiefte Nut AT am Pfosten ist vorteilhafterweise in einem axialen Bereich des Schraubenkanals SK ausgebildet, so dass eine ausreichende Wandstärke auch bei der axial vertieften Nut gewährleistet ist. Die axial vertiefte Nut AT und die radial vertiefte Nut AR gehen ineinander über.

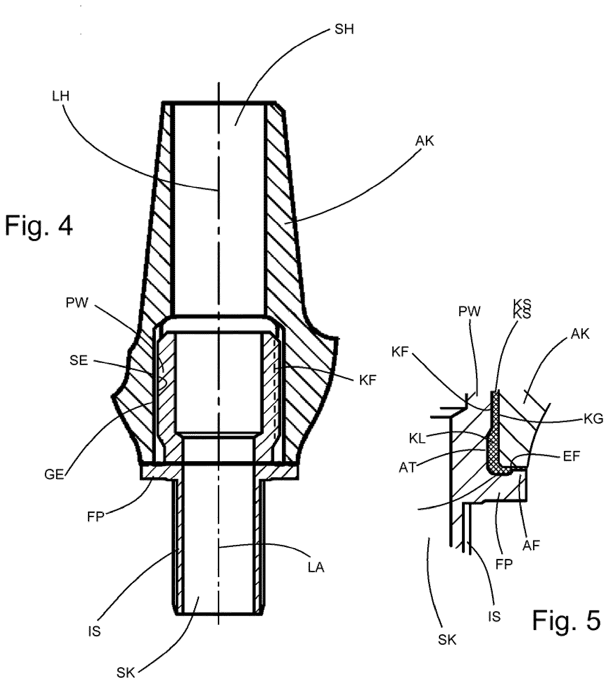

In Fig. 4 sind der Aufbaukörper AK und die Klebebasis in einer Schnittdarstellung im zusammen gefügten Zustand dargestellt. Hierbei sei angenommen, dass die in Fig. 1 (A) und Fig. 2 (A) fluchtend dargestellten Längsachsen LA, LH im zusammen gefügten Zustand im Idealfall zusammen fallen. Die Verdrehsicherungselemente SE und die Gegensicherungselemente GE bilden hierbei vorteilhafterweise Zentrierelemente, welche in alle Richtungen quer zu den Längsachsen LA, LH eine Relativverschiebung zwischen Aufbaukörper AK und Pfosten BP der Klebebasis bei Berücksichtigung unvermeidbarer Fertigungstoleranzen auf ein Maß begrenzen, welches wesentlich kleiner ist als der für die Verklebung zwischen der Klebefläche KF und der Gegenklebefläche KG vorgesehene Klebespalt. In Fig. 4 ist eine ideale zentrierte Ausrichtung zwischen Aufbaukörper AK und Klebebasis angenommen.

Aus dem vergrößerten Ausschnitt eines Axialbereichs mit der Stützplatte FP nach Fig. 5 ist ersichtlich, dass bei einer solchen idealen Zentrierung der Außenrand der Endfläche EF des Aufbaukörpers AK im wesentlichen radial mit dem Außenrand der Anschlagfläche AF der Stützplatte FP der Klebebasis zusammen fällt.

In Fig. 5 ist die Schnittebene abweichend von der Darstellung nach Fig. 4 so gelegt, dass die Schnittebene nicht durch ein Verdrehsicherungselement SE und ein Sicherungsgegenelement GE, sondern durch die Klebefläche KF und die Gegenklebefläche KG verläuft. Klebefläche KF und Gegenklebefläche KG sind dann durch einen Klebespalt KS, welcher mit einem Klebermaterial KL im wesentlichen ausgefüllt ist, radial voneinander beabstandet. Das Ausfüllen des Klebespalts KS mit Kleber KL erfolgt typischerweise in der Art, dass die Klebefläche KF und/oder die Gegenklebefläche KG, gegebenenfalls nach einer vorbereitenden Oberflächenbehandlung, mit einem viskosen Klebermaterial, welches auch Füllkörper enthalten kann, bedeckt werden und danach der Aufbaukörper AK und die Klebebasis axial zusammen gefügt werden. Vor dem Zusammenfügen werden auch die Endfläche EF und/oder die Anschlagfläche AF mit Klebermaterial versehen.

Zum Ende des axialen Fügevorgangs muss durch axiales Anpressen von Aufbaukörper AK und Klebebasis Kleber in dem Spalt zwischen Endfläche EF und Anschlagfläche AF quer zur axialen Fügerichtung verdrängt werden. Hierfür ist vorteilhaft, dass die Anschlagfläche AF durch die Ringnut AR von dem Pfosten beabstandet ist und nur eine gegenüber dem radialen Überstand der Stützplatte über den Pfosten wesentlich geringere Ringbreite RA nach Fig. 3 aufweist. Die gegenüber dem Ringbereich des Überstands der Stützplatte über den Pfosten wesentlich geringere Ringfläche der Anschlagfläche AF hat zur Folge, dass ein höherer Druck bei der Anschlagfläche AF erreicht und daher das Klebermaterial besser aus dem Spalt zwischen Endfläche EF und Anschlagfläche AF verdrängt werden kann und der axiale Abstand zwischen Endfläche EF und Anschlagfläche AF vorteilhaft gering ist. Zusätzlich zu der Verringerung des Flächenanteils der Anschlagfläche AF an dem den Pfosten umgebenden Ringbereich der Stützplatte FP hat die axial vertiefte Nut AR ferner die vorteilhafte Eigenschaft, dass Klebermaterial aus dem Spalt zwischen Endfläche EF und Anschlagfläche AF radial nach innen in Richtung dieser axial vertieften Nut AR ausweichen kann.

Vorteilhafterweise setzt sich die axial vertiefte Nut AR fort in die radial vertiefte Nut AT am Fuß des Pfostens, so dass insgesamt ein noch größerer Aufnahmeraum für beim Zusammenfügen verdrängtes Klebermaterial gegeben ist. Die Ringbreite RA der Anschlagfläche AF ist vorteilhafterweise nicht größer als 60 % der radialen Ringbreite des radialen Überstands der Stützplatte FP über den Pfosten, wobei die Ringbreite eines solchen Ringbereichs durch die Summe der Ringbreite RN der axial vertieften Nut AR und der Ringbreite RA der Anschlagfläche AF gegen den Radius der Klebefläche KF angenommen sei. Die Ringbreite RA beträgt vorteilhafterweise nicht mehr als 60 %, insbesondere nicht mehr als 50 % der Ringbreite RN + RA des Ringbereichs der Stützplatte um den Pfosten. Vorzugsweise ist die Ringbreite RA der Anschlagfläche AF kleiner als die Ringbreite RN der vertieften Nut AR.

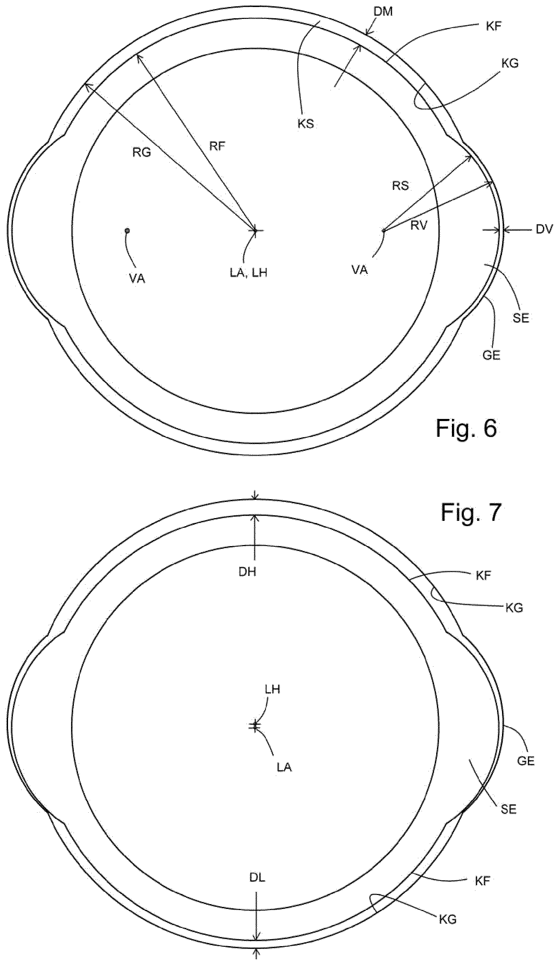

In Fig. 6 und Fig. 7 ist anhand von Querschnitten in Schnittebenen senkrecht zu den Längsachsen LA, LH veranschaulicht, wie bei einer bevorzugten Ausführung eine vorteilhafte Zentrierung zwischen Aufbaukörper und Klebebasis durch Doppelfunktion der Verdrehsicherungselemente SE und der Sicherungsgegenelemente GE erreicht wird. Die Abbildungen sind nicht maßstäblich zu verstehen. Von dem Aufbaukörper ist nur der Verlauf der die Gegenklebefläche KG bildenden Innenwand der Aussparung PA mit den zusätzlich radiale Ausbuchtungen bildenden Sicherungsgegenelementen GE dargestellt. Die Klebebasis ist nur durch die Innenkontur und Außenkontur des Pfostens BP mit der Klebefläche KF und den Verdrehsicherungselementen SE dargestellt.

Bei der in Fig. 6 dargestellten ideal zentrierten Relativposition von Aufbaukörper AK und Pfosten BP der Klebebasis fallen die Längsachsen LA und LH zusammen. Zwischen der Klebefläche KF des Pfostens und der Gegenklebefläche KG der Aussparung PA im Aufbaukörper bildet sich, mit Ausnahme der Umfangspositionen der Verdrehsicherungselemente SE und Sicherungsgegenelemente GE, ein Klebespalt KS der einheitlichen Spaltbreite DM, welche durch die Radien RF der Klebefläche und RG der Gegenklebefläche bestimmt ist. Die Spaltbreite DM des Klebespalts KS liegt typischerweise im Bereich zwischen 0,03 mm und 0,05 mm.

Die Verdrehsicherungselemente SE stehen in vorteilhafter Ausführungsform radial über den kreiszylindrischen Verlauf der Klebefläche KF hinaus und weisen dabei vorzugsweise im wesentlichen eine im Querschnitt nach Fig. 6 kreisbogenförmige Kontur mit einem Radius RS um einen gegen die Längsachse LA radial versetzten Mittelpunkt VA auf. Die Gegenfläche der Sicherungsgegenelemente GE in Form der radialen Ausbuchtungen gegen den kreiszylindrischen Verlauf der Gegenklebefläche KG weisen vorteilhafterweise gleichfalls im Querschnitt einen im wesentlichen kreisbogenförmigen Verlauf mit einem Radius RG um den gegen die Längsachse LH versetzten Mittelpunkt VA auf. In Fig. 6 ist für beide Kreisbogenkonturen der Mittelpunkt einheitlich mit VA bezeichnet.

Die kreisbogenförmigen Konturen sind besonders vorteilhaft dadurch, dass die Ausbuchtungen der Sicherungsgegenelemente GE gegen den kreiszylindrischen Verlauf der Gegenklebefläche KG häufig im Dentallabor in einem Rohling eines Aufbaukörpers hergestellt werden. Die kreisbogenförmige Kontur der Sicherungsgegenelemente GE kann dabei vorteilhafterweise mit einem in Dentallabors typischerweise verfügbaren rotierenden Fräs- oder Schleifwerkzeug auf einfache Weise hergestellt werden. So dass eine mit aufwändigeren Einrichtungen vorgefertigte Klebebasis mit im Dentallabor auch hinsichtlich der Verdrehsicherung fertig gestellten Aufbaukörper problemlos kombiniert werden kann. Die Klebebasis kann aber auch in Verbindung mit einem hinsichtlich der Aussparung vorkonfektioniert an Dentallabore gelieferten Aufbaukörper zu einem Abutment kombiniert werden.

Im Bereich der Verdrehsicherungselemente SE und der Sicherungsgegenelemente GE ist eine gegenüber der Breite des Klebespalts DM wesentlich geringere Spaltbreite DV zwischen den sich radial gegenüber stehenden Konturen mit Radien RS und RG vorgesehen. Die Spaltbreite DV kann insbesondere auf durch Fertigungstoleranzen bedingte Werte in der Größenordnung von 0,005 mm bis 0,02 mm beschränkt sein. Eine solche geringe Spaltbreite ist bei den gebräuchlichen Klebermaterialien wenig geeignet für eine kraftschlüssige Klebeverbindung, so dass die Haltekraft der Verklebung des Aufbaukörpers mit der Klebebasis im wesentlichen durch die Eigenschaften des Klebespalts zwischen der Klebefläche KF und der Gegenklebefläche KG bestimmt ist. Die Breite DM des Klebespaltes KS und die Eigenschaften des verwendeten Klebermaterials können dabei unabhängig von der Verdrehsicherung aufeinander abgestimmt werden.

Durch den geringen Spalt zwischen den sich gegenüber stehenden Konturen der Verdrehsicherungselemente SE und der Sicherungsgegenelemente GE ergibt sich aus Fig. 6 augenfällig, dass eine verbleibende relative Verschiebbarkeit zwischen Aufbaukörper AK und Pfosten BP der Klebebasis quer zu deren Längsachsen in einer die beiden Verdrehsicherungselemente SE verbindenden Durchmesserlinie auf das Maß des Spaltes DV begrenzt ist. Bei einer Verschiebung in dieser Richtung variiert daher die Breite des Klebespalts KS in der Nähe der Verdrehsicherungselemente SE allenfalls um annähernd das Maß DV des Spaltes zwischen den Konturen der Verdrehsicherungselemente SE und der Sicherungsgegenelemente GE. Bei einer beispielhaft angenommenen Spaltbreite DM des Klebespalts KS in der in Fig. 6 dargestellten ideal zentrierten Position von 0,04 mm und einer Spaltbreite DV von 0,01 mm ergibt sich damit bei einer Relativverschiebung in Richtung der genannten Durchmesserlinie zwischen den gegenüber liegenden Verdrehsicherungselementen SE eine Variation der Spaltbreite in Umfangsrichtung zwischen ca. 0,03 mm und ca. 0,05 mm. Bei diesen Werten der dann veränderlichen Spaltbreite des Kleberspaltes kann noch von einer hohen Haltekraft der Klebeverbindung ausgegangen werden.

Dem steht zum Vergleich die Situation gegenüber, dass in an sich bekannter Art lediglich ein Verdrehsicherungselement SE und ein Sicherungsgegenelement GE vorgesehen sind, für welche bei idealer Zentrierung mit einer Spaltbreite DM des Klebespalts wiederum ein Abstand DV der Konturen von Verdrehsicherungselement SE und Sicherungsgegenelement GE mit den genannten Werten angenommen sei. Beispielsweise seien anstelle der in Fig. 6 linksseitigen Elemente der Verdrehsicherung die Klebefläche KF und die Gegenklebefläche KG in ihrem kreiszylindrischen Verlauf um die Längsachsen an der linken Seite durchgehend mit konstanter Spaltbreite ausgeführt. Bei einer solchen Konstellation ist offensichtlich, dass eine Relativverschiebung der Klebebasis relativ zum Aufbaukörper nach links um das gesamte Maß DM der Spaltbreite des Klebespalts KS im Extremfall möglich wäre und die Spaltbreite dann zwischen ungefähr Null auf der linken Seite und ungefähr der doppelten Spaltbreite neben der einzigen Verdrehsicherung mit Verdrehsicherungselement SE und Sicherungsgegenelement GE möglich wäre. Da Abweichungen der Klebespaltbreite von einer angestrebten Soll-Breite sowohl zu deutlich kleineren als auch zu deutlich größeren Spaltbreiten zu einer spürbaren Schwächung der Stabilität der Klebeverbindung führen, wäre eine solche Klebeverbindung bei einer Anordnung mit nur einer Verdrehsicherung mit einem Verdrehsicherungselement SE und einem Sicherungsgegenelement GE gegenüber der in Fig. 6 beispielhaft dargestellten Anordnung von erheblichem Nachteil.

Die Verdrehsicherungselemente SE und Gegensicherungselemente GE in der in Fig. 6 dargestellten Ausführung wirken daher in der geschilderten Weise neben ihrer Sicherung gegen Relativverdrehung zwischen Aufbaukörper und Pfosten der Klebebasis vorteilhafterweise auch als Zentrierelemente zur Begrenzung einer Querverschiebung in Richtung der genannten Durchmesserlinie auf einen gegenüber der in Fig. 6 mit DM bezeichneten Spaltbreite des Klebespalts KS wesentlich kleineren Wert.

Anhand der Fig. 7 ist veranschaulicht, dass die Verdrehsicherungselemente SE in Zusammenwirken mit den Sicherungsgegenelementen GE nicht nur bei der geschilderten Querverschiebung in Richtung der genannten Durchmesserlinie durch die Längsachse LA und die Mittelpunkte VA eine vorteilhafte Begrenzung auf kleine Verschiebewerte bilden, sondern auch bei einer angenommenen Relativverschiebung zwischen Aufbaukörper und Pfosten der Klebebasis in einer Querrichtung senkrecht zu der Durchmesserlinie durch Längsachse LA und Mittelpunkte VA die Verschiebung auf kleine Werte beschränkt ist, indem die Konturen der Verdrehsicherungselemente SE und der Sicherungsgegenelemente GE in Randbereichen aneinander anliegen und die Verschiebung auf diese Weise begrenzen. Es stellt sich in einer solchen Situation wiederum eine über den Umfang um die Klebefläche KF variierende Spaltbreite des Klebespalts ein, wobei die Spaltbreite zwischen einem Minimalwert DL, in Fig. 7 unten, und einer maximalen Spaltbreite DH variiert. Es zeigt sich, dass die mit den geschilderten Konturen sich ergebenden minimalen und maximalen Spaltbreiten DL, DH wiederum in etwa den bei der geschilderten und in Fig. 7 veranschaulichten Verschiebung in Richtung der Durchmesserlinie VA, LA, VA auftretenden Extremwerten der Spaltbreite des Klebespalts entsprechen und somit auch in dieser angenommenen Situation eine Beschränkung auf Spaltbreiten mit guter Stabilität der Klebeverbindung gewährleistet ist. Es zeigt sich, dass auch bei einer zusätzlich überlagerten Relativverdrehung zwischen Aufbaukörper und Pfosten der Klebebasis in dem durch die Verdrehsicherungselemente SE und die Sicherungsgegenelemente GE zugelassenen Umfang die Variation der Spaltbreite des Klebespalts immer auf einen tolerierbaren Spaltbreitenbereich um die ideale und auch als mittlere Spaltbreite bezeichnete Spaltbreite DM begrenzt bleibt und somit immer eine gute Stabilität der Klebeverbindung erwartet werden kann.

Die Verdrehsicherungselemente SE und die Sicherungsgegenelemente GE sind, wie in Fig. 2 dargestellt, vorteilhafterweise über eine größere axiale Länge an dem Pfosten, vorzugsweise im wesentlichen über die gesamte Länge der Klebefläche durchgehend ausgebildet. Der anhand von Fig. 6 und Fig. 7 geschilderte Begrenzungseffekt bei auftretenden Verschiebungen ist damit sowohl nahe beim Fuß des Pfostens als auch nahe bei dem der Stützplatte abgewandten freien Ende des Pfostens gegeben und die Strukturen der Verdrehsicherungselemente und der Sicherungsgegenelemente sind dadurch auch gegen eine Verkippung der Längsachse LH des Aufbaukörpers gegen die Längsachse LA der Klebebasis begrenzend wirksam. Eine solche Wirksamkeit gegen Verkippung wäre auch gegeben, wenn die Verdrehsicherungselemente SE nicht in zur Längsachse LA paralleler Richtung durchgehend mit gleicher Kontur ausgebildet wären, sondern nur Abschnitte der Verdrehsicherungselemente SE nahe beim Fuß des Pfostens und nahe beim freien Ende des Pfostens vorgesehen wären. Da für den axialen Fügevorgang aber die Sicherungsgegenelemente GE parallel zur Längsachse LH durchgehend ausgebildet sein müssen, erbringt eine Unterbrechung der Verdrehsicherungselemente SE in axialer Richtung keinen funktionalen Vorteil.

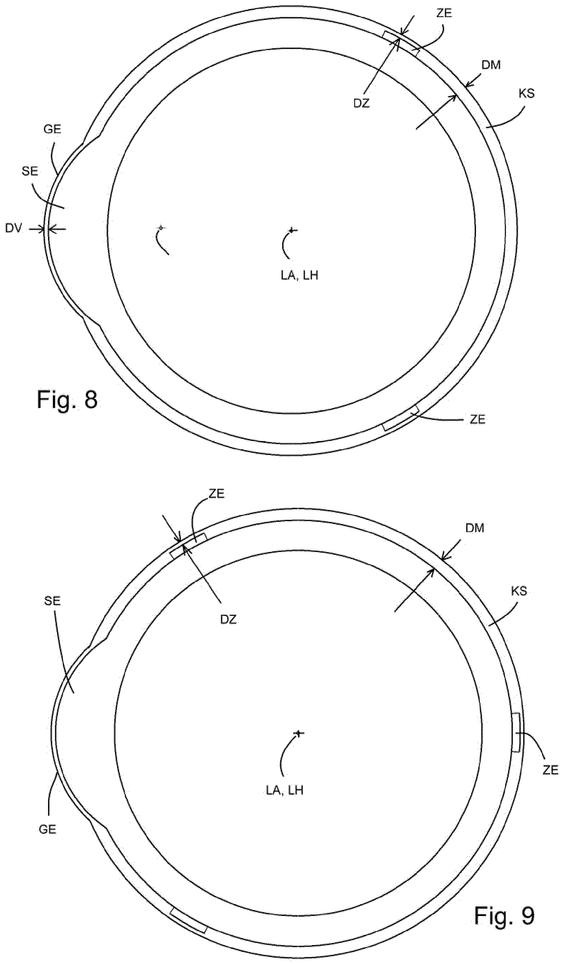

In Fig. 8 ist in zu Fig. 6 analoger Darstellung eine alternative Ausführungsform der eine Querverschiebung begrenzenden Zentrierung zwischen Pfosten der Klebebasis und Aufbaukörper skizziert. Bei dieser Ausführung ist eine Verdrehsicherung lediglich an einer Position durch ein Verdrehsicherungselement SE und ein Sicherungsgegenelement GE vorgesehen, für welche wiederum die beschriebenen gekrümmten Konturen mit den damit verbundenen Vorteilen vorgesehen seien, wobei diese Konturen sich wieder analog zum Beispiel nach Fig. 6 bei der ideal zentrierten Position mit einem Spaltmaß DV beabstandet gegenüber stehen. Verdrehsicherungselement SE und Sicherungsgegenelement GE haben dann eine zentrierende, d. h. eine Querverschiebung begrenzende Funktion nur bei einer angenommenen Relativverschiebung der Klebebasis relativ zum Aufbaukörper in Richtung nach links in Fig. 8.

Für eine Begrenzung einer relativen Querverschiebung zwischen Klebebasis und Aufbaukörper auch in andere Richtungen sind in der Ausführung nach Fig. 8 über den Umfang der Klebefläche KF um die Längsachse LA wenigstens zwei vom kreiszylindrischen Verlauf der Klebefläche KF radial nach außen vorstehende Zentrierelemente ZE vorgesehen, welche bezüglich der Längsachse LA relativ zu dem Verdrehsicherungselement SE und zueinander winkelversetzt angeordnet sind. Vorzugsweise sind Verdrehsicherungselemente SE und die beiden Zentrierelemente ZE jeweils um annähernd gleiche Winkel von ca. 120° relativ zueinander verdreht angeordnet.

Der radiale Überstand der Zentrierelemente ZE über die Kreiszylinderfläche der Klebefläche KF ist so bemessen, dass sich zwischen den radial nach außen weisenden Flächen der Zentrierelemente ZE und der Gegenklebefläche KG in der Aussparung des Aufbaukörpers in der in Fig. 8 dargestellten ideal zentrierten Position Spalte mit einer Spaltbreite DZ ergeben, wobei das Spaltmaß DZ als näherungsweise gleich zu dem Spaltmaß DV bei der idealen Zentrierung angenommen sei. Es ist offensichtlich, dass durch die Kombination der Zentrierelemente ZE mit der durch das Verdrehsicherungselement SE und das Sicherungsgegenelement GE gebildeten Verdrehsicherung wiederum eine Verschiebungsbegrenzung in alle Richtungen mit einem für alle Richtungen annähernd gleichen Maß der maximal auftretenden Verschiebung ergibt.

Bei dem Ausführungsbeispiel nach Fig. 8 ist nur an einer Umfangsposition eine Verdrehsicherung vorgesehen, so dass bei Herstellung einer vertieften Struktur eines Sicherungsgegenelements GE in einem Dentallabor dieser Vorgang nur an einer Seite vorgenommen werden muss und hierdurch auch die Wandstärke des Aufbaukörpers nur an einer Umfangsposition geschwächt ist.

Die Zentrierelemente ZE können in zu dem Verdrehsicherungselement SE entsprechender Weise über einen größeren axialen Abschnitt, insbesondere über die gesamte axiale Länge der Klebefläche durchgehend ausgebildet sein. Es kann aber auch vorgesehen sein, die Zentrierelemente ZE nur als diskrete Teilelemente axial voneinander beabstandet und insbesondere nahe beim Fuß des Pfostens und nahe beim freien Ende des Pfostens vorzusehen und hierdurch mit verringerter Abdeckung der Klebefläche durch die von den Zentrierelementen ZE beanspruchten Flächen sowohl eine Begrenzung einer Querverschiebung als auch eine Begrenzung einer Verkippung zu erreichen.

Fig. 9 zeigt eine weitere Variante, bei welcher in Abwandlung zu Fig. 8 über den Umfang der Klebefläche um die Längsachse LA verteilt an wenigstens drei relativ zueinander winkelversetzt angeordneten Positionen Zentrierelemente ZE der bereits zu Fig. 8 beschriebenen Art vorgesehen sind. Bei einer solchen Ausführung kann eine Zentrierung gegen Vertikalverschiebung allein durch die Zentrierelemente ZE in alle Querrichtungen auf das beschriebene vorteilhaft geringe Verschiebungsmaß begrenzt werden. Die Verdrehsicherung mit Verdrehsicherungselement SE und Sicherungsgegenelement GE braucht dann nicht die Zusatzfunktion der Zentrierung oder Kippbegrenzung erfüllen. Verdrehsicherungselement SE und Sicherungsgegenelement GE können dann auch in axialer Richtung auf einen kürzeren Abschnitt, insbesondere mit einem Verdrehsicherungselement SE nur nahe beim Fuß des Pfostens und mit einem Sicherungsgegenelement GE nur im Bereich nahe bei der Endfläche des Aufbaukörpers beschränkt sein.

Variationen der Anordnung von Zentrierelementen ZE sind in vielfacher Form gegeben. Insbesondere kann auch eine Kombination eines Querschnitts nach Fig. 8 mit einem auf den stützplattennahen Bereich beschränkten Verdrehsicherungselement SE und einem auf einen endflächennahen Bereich beschränkten Sicherungsgegenelement GE kombiniert sein mit drei Sicherungselementen in einer Verteilung nach Fig. 9 in einem dem freien Ende des Pfostens nahen axialen Bereich der Klebebasis.

## Patentansprüche

1. Zahnprothetisches Abutment mit einer einen Pfosten (BP) enthaltenden Klebebasis und mit einem in Richtung einer Längsachse (LA, LH) auf den Pfosten aufsteckbaren Aufbaukörper (AK), wobei an dem Pfosten eine bezüglich der Längsachse im wesentlichen radial nach außen weisende Klebefläche (KF) und an einer Innenwand des Aufbaukörpers eine im zusammengefügten Zustand mit der Klebefläche (KF) einen Klebespalt (KS) mit einer mittleren Spaltbreite (DM) bildende Gegenklebefläche (KG) ausgebildet sind, **dadurch gekennzeichnet, dass** an dem Pfosten (BP) mehrere um die Längsachse zueinander winkelversetzt angeordnete Zentrierelemente (SE, ZE) ausgebildet sind, welche radial über die Klebefläche hinaus ragen.

2. Zahnprothetisches Abutment nach Anspruch 1, **dadurch gekennzeichnet, dass** der mittlere radiale Abstand (DV, DZ) der Zentrierelemente (SE, ZE) zur Innenwand des Aufbaukörpers geringer ist als die mittlere Spaltbreite (DM), insbesondere wenigstens 50 %, vorzugsweise wenigstens 60 % der mittleren Spaltbreite (DM) geringer ist als die mittlere Spaltbreite.

3. Zahnprothetisches Abutment nach Anspruch 1 oder 2, **dadurch gekennzeichnet, dass** an dem Pfosten (BP) wenigstens ein Verdrehsicherungselement (SE) ausgebildet ist, welches in ein Sicherungsgegenelement (GE) im Aufbaukörper (AK) eingreift und eine relative Verdrehung von Klebebasis und Aufbaukörper um die Längsachse (LA, LH) verhindert.

4. Zahnprothetisches Abutment nach Anspruch 3, **dadurch gekennzeichnet, dass** das Sicherungsgegenelement (GE) eine im Querschnitt kreissegmentförmige Ausbuchtung an der Innenwand des Aufbaukörpers (AK) bildet.

5. Zahnprothetisches Abutment nach Anspruch 4, **dadurch gekennzeichnet, dass** das Verdrehsicherungselement (SE) einen über die Klebefläche (KF) radial hinaus ragenden Vorsprung mit im Querschnitt radial konvex gewölbter Kontur bildet.

6. Zahnprothetisches Abutment nach einem der Ansprüche 3 bis 5, **dadurch gekennzeichnet, dass** wenigstens ein Zentrierelement (SE) durch ein Verdrehsicherungselement gebildet ist.

7. Zahnprothetisches Abutment nach Anspruch 6, **dadurch gekennzeichnet, dass** wenigstens zwei, vorzugsweise genau zwei Zentrierelemente durch Verdrehsicherungselemente (SE) gebildet sind.

8. Klebebasis für ein zahnprothetisches Abutment nach Anspruch 1, mit einem eine Längsachse umgebenden Pfosten (BP), welcher eine bezüglich der Längsachse (LA) im wesentlichen radial nach außen weisende Klebefläche (KF) aufweist, **dadurch gekennzeichnet, dass** an dem Pfosten (BP) mehrere um die Längsachse (LA) zueinander winkelversetzt angeordnete Zentrierelemente (SE, ZE) ausgebildet sind, welche radial über die Klebefläche (KF) hinaus ragen.

9. Klebebasis nach Anspruch 8, **dadurch gekennzeichnet, dass** die Klebefläche in einer rotationssymmetrisch um die Längsachse verlaufenden Rotationsfläche ausgebildet ist.

10. Klebebasis nach Anspruch 8 oder 9, **dadurch gekennzeichnet, dass** wenigstens ein Zentrierelement (SE) um mehr als 0,05 mm radial über die Klebefläche (KF) hinaus ragt.

11. Klebebasis nach Anspruch 10, **dadurch gekennzeichnet, dass** das wenigstens eine Zentrierelement (SE) eine im Querschnitt konvex radial nach außen gewölbte Kontur aufweist.

12. Klebebasis nach einem der Ansprüche 8 bis 11, **dadurch gekennzeichnet, dass** zwei Zentrierelemente (SE, ZE) vorgesehen und um 180° winkelversetzt zueinander angeordnet sind.

13. Klebebasis nach einem der Ansprüche 8 bis 12, **dadurch gekennzeichnet, dass** Zentrierelemente (SE, ZE) bei axial entgegen gesetzten Enden der Klebefläche (KF) angeordnet sind.

14. Klebebasis nach Anspruch 13, **dadurch gekennzeichnet, dass** wenigstens ein Zentrierelement (SE) axial über die gesamte Erstreckung der Klebefläche (KF) ausgebildet ist.

## Claims

1. Dental implant abutment with an adhesive-bonding base containing a post (BP), and with a superstructure body (AK) which can be plugged onto the post in the direction of a longitudinal axis (LA, LH), wherein an adhesive-bonding surface (KF) facing substantially radially outwards with respect to the longitudinal axis is formed on the post, and a mating adhesive-bonding surface (KG) forming an adhesive-bonding gap (KS) with a mean gap width (DM) when joined to the adhesive-bonding surface (KF) is formed on an inside wall of the superstructure body, **characterized in that** several centring elements (SE, ZE) angularly offset in relation to one another about the longitudinal axis are formed on the post (BP) and protrude radially beyond the adhesive-bonding surface.

2. Dental implant abutment according to Claim 1, **characterized in that** the mean radial distance (DV, DZ) of the centring elements (SE, ZE) from the inside wall of the superstructure body is less than the mean gap width (DM), in particular at least 50% and preferably at least 60% of the mean gap width (DM) smaller than the mean gap width.

3. Dental implant abutment according to Claim 1 or 2, **characterized in that** at least one anti-twist safety element (SE) is formed on the post (BP) and engages in a mating safety element (GE) in the superstructure body (AK) and prevents a relative twisting of the adhesive-bonding base and the superstructure body about the longitudinal axis (LA, LH).

4. Dental implant abutment according to Claim 3, **characterized in that** the mating safety element (GE) forms a bulge, with a cross section in the shape of a segment of a circle, on the inside wall of the superstructure body (AK).

5. Dental implant abutment according to Claim 4, **characterized in that** the anti-twist safety element (SE) forms a projection which protrudes radially beyond the adhesive-bonding surface (KF) and which, in cross section, has a radially convexly curved contour.

6. Dental implant abutment according to one of Claims 3 to 5, **characterized in that** at least one centring element (SE) is formed by an anti-twist safety element.

7. Dental implant abutment according to Claim 6, **characterized in that** at least two centring elements, preferably precisely two centring elements, are formed by anti-twist safety elements (SE).

8. Adhesive-bonding base for a dental implant abutment according to Claim 1, with a post (BP) which surrounds a longitudinal axis and has an adhesive-bonding surface (KF) facing substantially radially outwards with respect to the longitudinal axis (LA), **characterized in that** several centring elements (SE, ZE) angularly offset in relation to one another about the longitudinal axis (LA) are formed on the post (BP) and protrude radially beyond the adhesive-bonding surface (KF).

9. Adhesive-bonding base according to Claim 8, **characterized in that** the adhesive-bonding surface is formed in a rotation surface extending rotationally symmetrically about the longitudinal axis.

10. Adhesive-bonding base according to Claim 8 or 9, **characterized in that** at least one centring element (SE) protrudes radially beyond the adhesive-bonding surface (KF) by more than 0.05 mm.

11. Adhesive-bonding base according to Claim 10, **characterized in that** the at least one centring element (SE) has a contour which, in cross section, curves convexly radially outward.

12. Adhesive-bonding base according to one of Claims 8 to 11, **characterized in that** two centring elements (SE, ZE) are provided and are arranged with an angular offset of 180° to each other.

13. Adhesive-bonding base according to one of Claims 8 to 12, **characterized in that** centring elements (SE, ZE) are arranged at axially opposite ends of the adhesive-bonding surface (KF).

14. Adhesive-bonding base according to Claim 13, **characterized in that** at least one centring element (SE) is formed axially across the full extent of the adhesive-bonding surface (KF).

## Revendications

1. Système d'ancrage d'une prothèse dentaire avec une base de collage contenant un pilier (BP) et avec un corps de montage (AK) à engager sur le pilier dans la direction d'un axe longitudinal (LA, LH), dans lequel une face de collage (KF) orientée essentiellement radialement vers l'extérieur par rapport à l'axe longitudinal est formée sur le pilier et une face de collage opposée (KG) formant à l'état monté avec la face de collage (KF) une fente de collage (KS) avec une largeur de fente moyenne (DM) est formée sur une paroi intérieure du corps de montage, **caractérisé en ce que** plusieurs éléments de centrage (SE, ZE) disposés avec un décalage angulaire l'un par rapport à l'autre autour de l'axe longitudinal sont formés sur le pilier (BP), et s'étendent radialement au-delà de la face de collage.

2. Système d'ancrage d'une prothèse dentaire selon la revendication 1, **caractérisé en ce que** la distance radiale moyenne (DV, DZ) des éléments de centrage (SE, ZE) à la paroi intérieure du corps de montage est plus petite que la largeur de fente moyenne (DM), en particulier est plus petite d'au moins 50 %, de préférence d'au moins 60 % de la largeur de fente moyenne (DM), que la largeur de fente moyenne.

3. Système d'ancrage d'une prothèse dentaire selon la revendication 1 ou 2, **caractérisé en ce qu'**au moins un élément de blocage de rotation (SE) est formé sur le pilier (BP), élément qui s'engage dans un élément de blocage opposé (GE) dans le corps de montage (AK) et empêche une rotation relative de la base de collage et du corps de montage autour de l'axe longitudinal (LA, LH).

4. Système d'ancrage d'une prothèse dentaire selon la revendication 3, **caractérisé en ce que** l'élément de blocage opposé (GE) forme un renflement de section transversale en forme de segment de cercle sur la paroi intérieure du corps de montage (AK).

5. Système d'ancrage d'une prothèse dentaire selon la revendication 4, **caractérisé en ce que** l'élément de blocage de rotation (SE) forme une saillie s'étendant radialement au-delà de la face de collage (KF), avec un contour à courbure radialement convexe en section transversale.

6. Système d'ancrage d'une prothèse dentaire selon l'une quelconque des revendications 3 à 5, **caractérisé en ce qu'**au moins un élément de centrage (SE) est formé par un élément de blocage de rotation.

7. Système d'ancrage d'une prothèse dentaire selon la revendication 6, **caractérisé en ce qu'**au moins deux, de préférence exactement deux éléments de centrage sont formés par des éléments de blocage de rotation (SE).

8. Base de collage pour un système d'ancrage d'une prothèse dentaire selon la revendication 1, avec un pilier (BP) entourant un axe longitudinal, lequel présente une face de collage (KF) orientée essentiellement radialement vers l'extérieur par rapport à l'axe longitudinal (LA), **caractérisée en ce que** plusieurs éléments de centrage (SE, ZE) disposés avec un décalage angulaire l'un par rapport à l'autre autour de l'axe longitudinal (LA) sont formés sur le pilier (BP), éléments qui s'étendent radialement au-delà de la face de collage (KF).

9. Base de collage selon la revendication 8, **caractérisée en ce que** la face de collage est formée dans une face de rotation s'étendant avec la symétrie de révolution autour de l'axe longitudinal.

10. Base de collage selon la revendication 8 ou 9, **caractérisée en ce qu'**au moins un élément de centrage (SE) s'étend de plus de 0,05 mm radialement au-delà de la face de collage (KF).

11. Base de collage selon la revendication 10, **caractérisée en ce que** ledit au moins un élément de centrage (SE) présente un contour à courbure convexe radialement vers l'extérieur en section transversale.

12. Base de collage selon l'une quelconque des revendications 8 à 11, **caractérisée en ce qu'**il est prévu deux éléments de centrage (SE, ZE) et ils sont disposés avec un décalage angulaire de 180° l'un par rapport à l'autre.

13. Base de collage selon l'une quelconque des revendications 8 à 12, **caractérisée en ce que** des éléments de centrage (SE, ZE) sont disposés à des extrémités axialement opposées de la face de collage (KF).

14. Base de collage selon la revendication 13, **caractérisée en ce qu'**au moins un élément de centrage (SE) est formé axialement sur toute l'extension de la face de collage (KF).
